(19) Europäisches Patentamt
European Patent Office
Office européen des brevets

(11) EP 3 919 463 A1

(12) EUROPEAN PATENT APPLICATION

(43) Date of publication:
08.12.2021 Bulletin 2021/49

(51) Int Cl.:
C04B 37/00 (2006.01)

(21) Application number: 20177735.6

(22) Date of filing: 02.06.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Heraeus GMSI LLC
Tempe, AZ 85284 (US)

(72) Inventors:
• Walker, Luke
Tempe, AZ 85284 (US)
• Donelon, Matthew Joseph
Tempe, AZ 85284 (US)

(74) Representative: Gille Hrabal
Partnerschaftsgesellschaft mbB
Patentanwälte
Brucknerstraße 20
40593 Düsseldorf (DE)

(54) **PLASMA RESISTANT CERAMIC BODY FORMED FROM MULTIPLE PIECES**

(57)    Disclosed is a joined ceramic body comprising a first ceramic portion comprising a first ceramic, a second ceramic portion comprising a second ceramic, and a joining layer between interfaces of the first ceramic portion and the second ceramic portion. The joining layer has a bond thickness of between 0.1 and 20 um and comprises silicon dioxide having a total impurity content of 20 ppm and less. Methods of making the joined ceramic body and a joining material are also disclosed.

Fig. 4

## Description

FIELD

Embodiments of the disclosure relate to plasma resistant ceramic bodies formed from multiple pieces or portions for use as components in plasma etch or deposition chambers. The ceramic portions are joined or bonded to form a joined ceramic body using a plasma resistant glass or glass ceramic joining material. Moreover, embodiments of the present disclosure further provide a process for making the joined ceramic body and a plasma resistant ceramic component from the body.

BACKGROUND

This section discloses subject matter related to the disclosed embodiments. There is no intention, either expressed or implied, that the background art discussed in this section legally constitutes prior art.

Glass is an amorphous solid and as such has no crystalline structure. A glass ceramic is made by first forming a glass and thereafter at least partially crystallizing the glass through careful control of thermal processing and cooling rates. This results in a glass ceramic material with a microstructure having crystalline regions surrounded by a glassy, amorphous matrix. The glassy matrix fills in voids and porosity which may otherwise be present in ceramic materials. Properties of the glass ceramic material may be adjusted according to composition and processing to achieve unique properties differing from those of glasses or ceramic materials.

During processing of semiconductor substrates, plasmas are typically used to remove materials on the chamber walls and substrates. The plasma conditions create a highly corrosive and erosive environment and expose the walls and components of the chamber to significant ion bombardment and chemical corrosion. This ion bombardment, combined with plasma chemistries and/or etch by-products, can produce significant surface roughening, erosion, corrosion and corrosion-erosion of the plasma-exposed surfaces of the processing chamber. As a result, the surface materials are removed by physical and/or chemical attack. This attack causes problems including short part lifetimes which lead to extended tool downtime, increased consumable costs, particulate contamination, on-wafer transition metal contamination and process drift.

Because of this erosive and corrosive nature of the plasma environment in such reactors, there is a need to minimize particle and/or metal contamination. Accordingly, it is desirable for component and bonding materials designed for fabrication of such equipment, including consumables and other parts, to have suitably high erosion and corrosion resistance. In keeping with this, those plasma chamber components and bonding or joining materials which have very high purity may provide a uniformly corrosion resistant surface low in impurities which may prevent corrosion and erosion during use. Such plasma chamber component parts have been formed from exemplary etch resistant materials, without limitation, as aluminum oxide, yttrium oxide, one or more forms of yttrium aluminum oxide, and aluminum nitride, that provide resistance to corrosion and erosion in plasma environments. These exemplary etch resistant bodies are disclosed in US provisional patent application number 62/829,720 entitled "controlled porosity yttrium oxide for etch applications" and US provisional patent application number 62/936821 entitled "ceramic sintered body for corrosion resistant components" both of which are incorporated by reference herein in their entirety.

Typical glasses used in various electronics applications suffer from poor performance in halogen based plasma applications and/or high levels of alkali and alkaline earth elements, as well as borosilicate compounds making them unusable in applications where high purity is required. Further, the presence of boron in many glass compositions may be incompatible with semiconductor device manufacturing processes.

Plasma processing chambers have been designed to include parts such as disks, showerheads or windows, nozzles, chamber liners, various rings such as focus rings and protective rings, and cylinders that confine the plasma over the wafer being processed.

In order to meet the ongoing drive towards finer feature and node size, chamber components used in processing semiconductor substrates are required to have greater functionality, necessitating more complex structures. These structures may have multiple layers, embedded elements, partial or patterned layers of different materials combined into a single body or component. In order to fabricate these higher complexity structures, bonding or joining of multiple, etch resistant members may be required to form such components as wafer support assemblies, for example chucks or electrostatic chucks (ESC), RF or dielectric windows, injectors or nozzles having multiple openings for different process gases, process or other rings with embedded wires, mesh or other elements providing electrical functionality, among other components. Use of an array of materials bonded in various configurations poses issue due to the differing material properties. As example, mechanical properties of the joining material, such as the coefficient of thermal expansion (CTE), must be compatible with that of the ceramic member selected for use to avoid cracking and/or delamination from thermal excursions produced during use in semiconductor fabrication. Additionally, the bonding process often requires pressures on the order of 0.15 MPa and greater, for example up to 1.4 MPa, in order to ensure sufficient bonding between pieces.

Further, the joining or bonding materials applied between the ceramic members are continuously attacked by the plasma in the same manner as the ceramic members and consequently erode, corrode or accumulate contaminants and polymer build-up and therefore are subject to the same etch resistance requirements as the ceramic members themselves. Thus, chamber component resistance to corrosion and erosion in halogen plasma applications, as well as the useful life of these components, may be limited by the bonding materials selected for use. There is an ongoing effort to improve the plasma resistance performance of chamber components for etch and deposition semiconductor processes, in particular those components made of multiple pieces to accommodate more stringent design requirements as necessitated by state of the art semiconductor processing chambers. Use of the materials and methods disclosed herein will provide performance improvements over the known art.

As such, there is a need for multiple piece, corrosion and erosion resistant ceramic bodies joined by corrosion and erosion resistant glass or glass ceramic materials.

SUMMARY

Starting from the aforementioned related art, these and other needs are addressed by the various embodiments, aspects and configurations as disclosed herein:

/1/ A joined ceramic body comprising a first ceramic portion comprising a first ceramic, a second ceramic portion comprising a second ceramic, a joining layer between interfaces of the first ceramic portion and the second ceramic portion, wherein the joining layer has a bond thickness of between 0.1 and 20 um and comprises silicon dioxide having a total impurity content of 20 ppm and less.

/2/ The joined ceramic body of claim 1 wherein the joining layer is formed from a powder having a specific surface area of between 25 $m^2$/g and 50 $m^2$/g as measured by BET methods prior to a sintering step.

/3/ The joined ceramic body of any one of the preceding claims wherein the joining layer has a total impurity content of 10 ppm and less.

/4/ The joined ceramic body of any one of the preceding claims wherein the joining layer has a total impurity content of 5 ppm and less.

/5/ The joined ceramic body of any one of the preceding claims wherein the joining layer has a purity of 99.999% and higher.

/6/ The joined ceramic body of any one of the preceding claims wherein the joining layer has a purity of 99.9995% and higher.

/7/ The joined ceramic body of any one of the preceding claims wherein the first and second ceramic portions are comprised of the same ceramic.

/8/ The joined ceramic body of any one of the preceding claims wherein the first and second ceramic are comprised of different ceramics.

/9/ The joined ceramic body of any one of the preceding claims wherein each of the first and second ceramic portions are selected from the group consisting of aluminum oxide, yttrium oxide, aluminum nitride, yttrium aluminum garnet (YAG; $Y_3Al_5O_{12}$), yttrium aluminum monoclinic (YAM, $Y_4Al_2O_9$), yttrium aluminum perovskite (YAP, YA-$lO_3$), silicon carbide, quartz, SiAlON materials and combinations thereof.

/10/ The joined ceramic body of any one of the preceding claims wherein the first ceramic portion comprises yttrium oxide and the second ceramic portion comprises aluminum oxide.

/11/ The joined ceramic body of any one of the preceding claims wherein the joining layer further comprises aluminum oxide.

/12/ The joined ceramic body of any one of the preceding claims wherein the joining layer further comprises yttrium oxide.

/13/ The joining layer of claims 11 and 12 wherein the aluminum oxide and yttrium oxide each have a purity of 99.99% and higher.

/14/ The joined ceramic body of any one of the preceding claims wherein the joining layer has a total purity of 99.995% and higher.

/15/ The joined ceramic body of any one of the preceding claims wherein the joining layer has a total purity of 99.999% and higher.

/16/ The joined ceramic body of any one of the preceding claims, wherein the joining layer has a bond thickness of between 0.1 and 10 um.

/17/ The joined ceramic body of any one of the preceding claims, wherein the joining layer has a bond thickness of between 0.1 and 5 um.

/18/ The joined ceramic body of any one of the preceding claims wherein the joining layer has an alkali or alkali earth impurity content of 5 ppm and less.

/19/ The joined ceramic body of any one of the preceding claims wherein the joining layer further comprises a rare earth oxide selected from the group consisting of Y2O3, La2O3, CeO2, Nd2O3, Pm2O3, Sm2O3, Eu2O3, Gd2O3, Tb4O7, Dy2O3, Ho2O3. Er203, Tm2O3, Yb2O3, Lu2O3 and combinations thereof.

/20/ The joined ceramic body of any one of the preceding claims wherein the joining layer further comprises an element selected from the group consisting of Y, La, Ce, Pr, Nd, Pm, Sm, Eu, Gd, Tb, Dy, Ho, Er, Tm, Yb and Lu and combinations thereof.

/21/ The joined ceramic body of any one of the preceding claims wherein the joining layer comprises a glass.

/22/ The joined ceramic body of any one of the preceding claims wherein the joining layer comprises a glass ceramic having a crystalline form in an amount between 1% and 99% by volume of the joining layer.

/23/ The joined ceramic body of any one of the preceding claims wherein the joining layer comprises a glass ceramic having a crystalline form in an amount between 10% and 99% by volume of the joining layer.

/24/ The joined ceramic body of any one of the preceding claims wherein the joining layer comprises a glass ceramic having a crystalline form in an amount between 20% and 99% by volume of the joining layer.

/25/ The joined ceramic body of any one of the preceding claims wherein the joining layer comprises a glass ceramic having a crystalline form in an amount between 1% and 90% by volume of the joining layer.

/26/ The joined ceramic body of any one of the preceding claims wherein the joining layer comprises a glass ceramic having a crystalline form in an amount between 1% and 80% by volume of the joining layer.

/27/ The joined ceramic body of any one of the preceding claims wherein the joining layer comprises a glass ceramic having a crystalline form in an amount between 1% and 70% by volume of the joining layer.

/28/ The joined ceramic body of any one of the preceding claims wherein the joining layer comprises a glass ceramic having a crystalline form in an amount between 50% and 80% by volume of the joining layer.

/29/ The joined ceramic body of any one of the preceding claims wherein the first and second ceramic portions are aluminum oxide.

/30/ The joined ceramic body of any one of the preceding claims wherein the first and second ceramic portions are selected from the group consisting of: Al2O3, AlN, SiAlON, SiC, Y2O3, yttrium aluminum garnet (YAG, $Y_3Al_5O_{12}$), yttrium aluminum monoclinic (YAM), yttrium aluminum perovskite (YAP), mullite and combinations thereof.

/31/ The joined ceramic body of any one of the preceding claims wherein the joining layer has a coefficient of thermal expansion within 0 to 5% of either the first or second ceramic portions.

/32/ The joined ceramic body of any one of the preceding claims wherein the first and second ceramic portions have a purity of 99.99% and higher.

/33/ The joined ceramic body of any one of the preceding claims wherein the first and second ceramic portions have a purity of 99.999% and higher.

/34/ A method of making a joined ceramic body, the method comprising: disposing a powder of silicon dioxide between surfaces of a first ceramic portion and a second ceramic portion to form a ceramic body assembly, increasing the temperature of the ceramic body assembly to a sintering temperature of the powder of silicon dioxide sufficient to join first and second ceramic portions to form the joined ceramic body; and lowering the temperature of the joined ceramic body, wherein the silicon dioxide has a specific surface area as measured by BET methods of at least 25 $m^2/g$ and a purity of 99.999% and higher, characterized in that the process is carried out under condition to prepare a joined ceramic body having characteristics as disclosed in any one of the preceding claims.

/35/ The method according to claim 34 wherein step a. further comprises a powder of aluminum oxide wherein the aluminum oxide has a purity of 99.99% and higher.

/36/ The method according to claims 34 or 35 wherein step a. further comprises a powder of at least one rare earth oxide selected from the group consisting of Y2O3, La2O3, CeO2, Nd2O3, Pm2O3, Sm2O3, Eu2O3, Gd2O3, Tb4O7, Dy2O3, Ho2O3, Er203, Tm2O3, Yb2O3, Lu2O3 and combinations thereof having a purity of 99.99% and higher.

/37/ The method according to claims 34 to 36 wherein the sintering temperature of step b. is between 1100 and 1500°C.

/38/ The method according to any one of claims 34 to 37 wherein the powders are in the form of a paste comprising a liquid selected from the group consisting of water, ethanol, isopropanol, glycerol, and combinations thereof.

/39/ The method according to any one of claims 34 to 38 further comprising the step of: machining the joined ceramic body to create a joined ceramic body component for use in a semiconductor processing chamber.

/40/ The method according to any one of claims 34 to 39 wherein the ceramic body component is selected from the group consisting of: a dielectric window or RF window, a ring, a nozzle or a gas injector, a shower head, a gas distribution plate, an etch chamber liner, a plasma source adapter, a gas inlet adapter, a diffuser, an electronic wafer chuck, a chuck, a puck, a mixing manifold, an ion suppressor element, a faceplate, an isolator, a spacer, and/or a protective ring in etch chambers.

/41/ A joined ceramic body for production of semiconductor chamber components made by the process of any one of claims 34 to 40.

/42/ A joined ceramic body according to anyone of claims 1 to 33 having a size of from 100 mm to 600 mm, preferably from 200 to 600 mm, preferably from 300 to 600 mm, preferably from 400 to 600 mm, more preferably from 450 to 600 mm, more preferably from 500 to 600 mm, more preferably 550 to 600 mm, each with regard to the longest extension of the ceramic body.

/43/ A plasma resistant composition, comprising: silicon dioxide having a particle size of between 30 and 200 nm and a specific surface area as measured by BET methods of between 25 m2/g and 50 m2/g; aluminum oxide; and at least one rare earth oxide selected from the group consisting of Y2O3, La2O3, CeO2, Nd2O3, Pm2O3, Sm2O3, Eu2O3, Gd2O3, Tb4O7, Dy2O3, Ho2O3, Er2O3, Tm2O3, Yb2O3, Lu2O3 and combinations thereof, and a suspension medium, wherein the plasma resistant composition comprises a paste.

/44/ The plasma resistant composition of claim 43 wherein the silicon dioxide has a total purity of at least 99.999% and higher.

/45/ The plasma resistant composition of any of claims 43 and 44 having a total purity of at least 99.995% and higher.

/46/ The plasma resistant composition of any one of claims 43 to 45 wherein the suspension medium comprises a liquid selected from the group consisting of water, ethanol, isopropanol, glycerol, and combinations thereof.

/47/ The plasma resistant composition of any one of claims 43 to 46 having a maximum particle size of between 4 and 6 microns.

/48/ The plasma resistant composition of any one of claims 43 to 47 wherein the aluminum oxide has a purity of 99.99% and higher.

/49/ The plasma resistant composition of any one of claims 43 to 48 wherein the at least one rare earth oxide selected from the group consisting of Y2O3, La2O3, CeO2, Nd2O3, Pm2O3, Sm2O3, Eu2O3, Gd2O3, Tb4O7, Dy2O3, Ho2O3, Er2O3, Tm2O3, Yb2O3, Lu2O3 and combinations thereof has a purity of 99.99% and higher.

/50/ The plasma resistant composition of any one of claims 43 to 49 wherein the silicon dioxide is present in an amount of 50% by weight, aluminum oxide is present in an amount of 25% by weight and the rare earth oxide is present in an amount of 25% by weight.

/51/ A joined ceramic body, comprising: first and second ceramic portions of aluminum oxide; a joining layer between interfaces of the first and second ceramic portions having a bond thickness of between 0.1 and 20 um, wherein the first and second ceramic portions have a purity of 99.99% and higher and the joining layer comprises silicon dioxide having a total impurity content of 20 ppm and less, aluminum oxide having a total impurity content of 50 ppm and less, and yttrium oxide having a total impurity content of 50 ppm and less.

/52/ A joined ceramic body, comprising: first and second ceramic portions of yttrium oxide, a joining layer between interfaces of the first and second ceramic portions, wherein the first and second ceramic portions have a purity of 99.999% and higher and the joining layer comprises silicon dioxide having a total impurity content of 20 ppm and less, and a bond thickness of between 0.1 and 20 um.

/53/ A joined ceramic body, comprising: first and second ceramic portions of yttrium aluminum oxide garnet (YAG, $Y_3Al_5O_{12}$) and a joining layer between interfaces of the first and second ceramic portions, wherein the first and second ceramic portions have a purity of 99.995% and higher and the joining layer comprises silicon dioxide having a total impurity content of 20 ppm and less and a bond thickness of between 0.1 and 20 um.

/54/ A joined ceramic body, comprising: a first ceramic portion of aluminum oxide and a second ceramic portion of yttrium oxide, a joining layer between interfaces of the first and second ceramic portions, wherein the first ceramic portion has a purity of 99.99% and higher and the second ceramic portion has a purity of 99.999% and higher and the joining layer comprises silicon dioxide having a total impurity content of 20 ppm and less and a bond thickness of between 0.1 and 20 um.

/55/ A joined ceramic body, comprising: first and second ceramic portions of aluminum oxide, a joining layer between interfaces of the first and second ceramic portions, wherein the first and second ceramic portions have a purity of 99.99% and higher and the joining layer comprises silicon dioxide having a total impurity content of 20 ppm and less and a bond thickness of between 0.1 and 20 um.

BRIEF DESCRIPTION OF THE DRAWINGS

FIG. 1 depicts an embodiment of a joined ceramic body in accordance with the disclosure.

FIG. 2 depicts an embodiment of a joined ceramic body not in accordance with the disclosure.

FIG. 3 shows differential scanning calorimetry results for a joining material as disclosed herein.

FIG. 4 illustrates a semiconductor processing system according to embodiments of the present technology.

FIG. 5 illustrates a wafer support assembly having chamber components of a chuck or electronic wafer chuck or electrostatic chuck (ESC) and a cover ring.

FIGS. 6A and 6B show a plan view and a detail cross section view of various rings used in semiconductor processing systems as disclosed herein.

FIG. 7 shows representative cross section views which may be applied to embodiments depicted in FIGS. 4, 5 and 6 as well as other multiple piece ceramic bodies or components as disclosed herein.

DETAILED DESCRIPTION

Reference will now be made in detail to specific embodiments. Examples of the specific embodiments are illustrated in the accompanying drawings. While the disclosure will be described in conjunction with these specific implementations, it will be understood that it is not intended to limit the disclosure to such specific embodiments. On the contrary, it is intended to cover alternatives, modifications, and equivalents as may be included within the spirit and scope as defined by the appended claims. In the following description, numerous specific details are set forth in order to provide a thorough understanding of the disclosed embodiments. The present disclosure may be practiced without some or all of these specific details.

When the word "about" is used herein, the nominal value disclosed has an associated variation of +/- 10%.

Disclosed herein are materials and methods useful for fabrication of chamber parts for semiconductor and/or microelectromechanical (MEMs) processing systems. Specifically, the materials and methods relate to a joining material useful for bonding separate structures together to fabricate a ceramic body component which provides enhanced resistance to halogen based process gases, and more specifically to process gases containing fluorine, as used in etch and/or deposition semiconductor processes.

These components made of joined structures may be chamber liners, RF or microwave windows, showerheads and/or gas distribution assemblies, focus, shield or clamping rings, gas injectors or nozzles, wafer chucks and/or electronic wafer chucks by way of example and not by way of limitation. The joining material as disclosed, method of making the joining material and use in making plasma resistant ceramic body components will enable fabrication of a range of components having greater structural complexity and finer feature size useful for fabrication of chamber components to meet design requirements for next generation technologies. As example, use of the corrosion and erosion resistant joining material disclosed herein provides the ability to bond structural members together while maintaining low particle generation, reduced contamination at the wafer scale, and extended component assembly lifetimes as necessary for use in semiconductor and MEMS processing applications. The materials and methods as disclosed herein provide a joined ceramic body and/or component resistant to corrosion and erosion of very high purity such that particles which may be released into the chamber may not be detrimental to semiconductor processing.

In an embodiment, disclosed herein is a joined ceramic body comprising a first ceramic portion comprising a first ceramic, a second ceramic portion comprising a second ceramic, and a joining layer between interfaces of the first ceramic portion and the second ceramic portion. The joining layer may have a thickness of between 0.1 and 20 um and comprises silicon dioxide having a total impurity content of 20 ppm and less.

The first and second ceramic portions may be selected from the same ceramic or different, dependent upon application specific requirements. In embodiments, first and second ceramic portions are selected from aluminum oxide, yttrium oxide, aluminum nitride, yttrium aluminum garnet (YAG; $Y_3Al_5O_{12}$), yttrium aluminum monoclinic (YAM, $Y_4Al_2O_9$), yttrium aluminum perovskite (YAP, $YAlO_3$), silicon carbide, quartz, SiAlON materials and combinations thereof. The materials selected for first and second ceramic portions may have suitably high corrosion and erosion resistance, material properties such as coefficient of thermal expansion, and purity acceptable for use as the joined ceramic body as disclosed. Specific combinations of joining layer and first and second ceramic portions are disclosed herein for fabrication of a joined ceramic body however embodiments of the joined ceramic body beyond those disclosed are also possible.

The joining layer may be comprised of silicon dioxide or combinations of silicon dioxide, aluminum oxide, and at least one rare earth oxide selected from the group consisting of Y203, La2O3, CeO2, Nd2O3, Pm2O3, Sm2O3, Eu2O3, Gd2O3, Tb4O7, Dy2O3, Ho2O3, Er203, Tm2O3, Yb2O3, Lu2O3. The joining layer made of silicon dioxide may have very high purity, for example having a total purity of greater than 99.999%, preferably greater than 99.9995%, preferably 99.9999%, with respect to 100% pure silicon dioxide, corresponding to impurity levels of 10 ppm, 5 ppm and 1 ppm, respectively. Use of high purity silicon dioxide as disclosed provides a very low (<5 ppm) alkali and/or alkaline earth joining layer which may enhance resistance to halogen based plasmas. For other embodiments as disclosed herein, the joining layer may be formed from silicon dioxide, aluminum oxide, and at least one rare earth oxide selected from the group consisting of Y203, La2O3, CeO2, Nd2O3, Pm2O3, Sm2O3, Eu2O3, Gd2O3, Tb4O7, Dy2O3, Ho2O3, Er203, Tm2O3, Yb2O3, Lu2O3 and combinations of these whereby the joining layer has a purity of 99.995% and greater, preferably 99.998% and greater, preferably 99.999% and greater. The joining layer as disclosed may include an element selected from the group consisting of Y, La, Ce, Pr, Nd, Pm, Sm, Eu, Gd, Tb, Dy, Ho, Er, Tm, Yb and Lu and combinations thereof.

The joining layer may be entirely an amorphous glass or it may be a glass ceramic having a crystalline form in an amount between 1% and 99% by volume of the joining layer, preferably between 10% and 99% by volume, preferably between 20% and 99% by volume, preferably between 1% and 90% by volume, preferably between 1% and 80% by volume, preferably between 1% and 70% by volume, preferably between 50% and 80% by volume. Either or both the glass and glass ceramic of the joining layer may in embodiments comprise at least one of the elements selected from the group consisting of Y, La, Ce, Pr, Nd, Pm, Sm, Eu, Gd, Tb, Dy, Ho, Er, Tm, Yb and Lu and combinations thereof.

In embodiments, it may be beneficial to minimize the thickness of the joining layer which may provide enhanced mechanical strength and plasma resistance. Disclosed is a joined ceramic body having a joining layer with a thickness of between 0.1 and 20 um, preferably between 0.1 and 15 um, preferably between 0.1 and 10 um, preferably between between 0.1 and 5 um, preferably between 0.1 and 3 um , preferably between 1 and 8 um, preferably between 3 and 5 um.

In embodiments as disclosed, it may be beneficial to select a joining layer having a coefficient of thermal expansion (CTE) the same as, or very close to, that of the first and/or second ceramic portions to minimize stresses between the ceramic portions and/or the joining layer upon heating, cooling and during use. This may prevent delamination or cracking of the ceramic body and/or the joining layer. The coefficient of thermal expansion of the glass ceramic joining layer may be adjusted for compatibility with that of the ceramic portions by varying the relative amounts of silicon dioxide, aluminum oxide, and at least one rare earth oxide as disclosed herein, for example such as yttrium oxide. The glass ceramic joining layer as disclosed may have a CTE the same as that of the ceramic portions, i.e. no difference, and between 0 to 5% of the ceramic portions across a temperature range from about 200°C to 1400°C.

Disclosed is a method of making a joined ceramic body. The method disclosed herein comprises the steps of:

> a. disposing a powder of silicon dioxide between surfaces of a first ceramic portion and a second ceramic portion to form a ceramic body assembly;
> b. increasing the temperature of the ceramic body assembly to a sintering temperature of the powder of silicon dioxide sufficient to join first and second ceramic portions to form the joined ceramic body; and
> c. lowering the temperature of the joined ceramic body,

wherein the silicon dioxide has a specific surface area as measured by BET methods of at least 25 m2/g and a purity of 99.999% and higher characterized in that the process is carried out under condition to prepare a joined ceramic body having characteristics as disclosed in any one of the preceding claims.

The method disclosed herein comprises step a disposing a powder of silicon dioxide between surfaces of a first ceramic portion and a second ceramic portion to form a ceramic body assembly. The powder of silicon dioxide may have a specific surface area as measured by BET methods as known in the art of 25 m2/g and higher, preferably 30 m2/g and higher, preferably between 25 to 50 m2/g, preferably between 25 to 40 m2/g. Surface areas of the silicon dioxide exceeding about 60 m2/g and greater may adversely impact reaction kinetics.

It is preferred, though not required, that the silicon dioxide is a nano powder, having an average particle size as measured by laser particle size measurement methods of between 20 to 200 nm, between 20 to 150 nm, between 20 to 100 nm, between 40 to 200, between 70 to 200 nm, between 100 to 200 nm, preferably an average particle size of between 30 to 90 nm. The fine particle size associated with silicon dioxide nano powders may result in agglomerates which as defined herein are clusters of loosely bound particles which may be broken down with application of shear or grinding forces applied during mixing or milling processes. The silicon dioxide powder may have an average agglomerate size of between 0.75 and 3 um, between 0.75 and 2.5 um, between 0.75 and 2 um, preferably between 1 and 2 um. The silicon dioxide powder may have a d90 agglomerate size of between 4 to 6 um, preferably between 4 to 5.5 um, preferably between 4.5 to 5.5 um.

The silicon dioxide powder forming the joining layer is of very high purity, having a total purity of greater than 99.999%, preferably greater than 99.9995%, preferably 99.9999% and greater. These levels of purity correspond to total impurity levels of 10, 5 and 1 ppm, respectively. The total purity also includes alkali and alkaline earth elements as well as low melting temperature, volatile metals, which are detrimental to application as components in semiconductor processing chambers.

To achieve the lowered sintering temperatures as disclosed, the silicon dioxide may in embodiments be a nanopowder. A nanopowder as used herein is intended to mean a powder having a particle size of between 20 to 200 um in diameter. The high purity of the silicon dioxide also provides a joining layer having a very low alkali and alkaline earth glass or glass ceramic composition with high join strength providing high resistance to halogen based plasmas.

The combination of high purity, high surface area and fine particle size provides enhanced reactivity, reducing joining temperatures and times without the requirement for applied pressure, although it may be used if desired. Use of highly pure silicon dioxide which may be a nanopowder, having a very small particle size and high surface area reduces the activation energy necessary for sintering and thereby contributes to reduced sintering temperatures of the joining material, as described in Vipin Kant Singh (1977) "Studies on the Sintering of Silicon Dioxide", Transactions of the Indian Ceramic Society, 36:1, 1-6, which is herein incorporated by reference. The activation energy as described therein may be calculated according to the Arrhenius Equation:

$$K = A \exp (- Q/RT)$$

where K is a rate constant, Q is the activation energy, T the absolute temperature, R the universal gas constant and A another constant. Sintering temperatures according to the embodiments disclosed herein may be between 1100 to 1500°C, preferably between 1100 to 1400°C, preferably between 1100 to 1300°C, preferably between 1100 to 1200°C, preferably between 1200 to 1500°C preferably between 1300 to 1500°C, preferably between 1400 to 1500°C, preferably between 1200 to 1400°C.

In embodiments, step a further comprises a powder of aluminum oxide and/or a powder of a rare earth oxide, for example yttrium oxide, wherein the aluminum oxide and yttrium oxide and/or rare earth oxide each have a purity of 99.99% and higher.

Compound oxide mixtures of more than one powder are hereinafter referred to as a joining material, comprising combinations of silicon dioxide as disclosed herein, aluminum oxide and at least one rare earth oxide selected from the group consisting of Y2O3, La2O3, CeO2, Nd2O3, Pm2O3, Sm2O3, Eu2O3, Gd2O3, Tb4O7, Dy2O3, Ho2O3, Er2O3, Tm2O3, Yb2O3, Lu2O3 and combinations thereof.

The surface area of the aluminum oxide as measured by BET methods as known to those skilled in the art may be at least 8 m2/g, preferably at least 12 m2/g, preferably at least 14 m2/g, preferably from between 8 to 18 m2/gm, preferably between 10 m2/g to 15 m2/g.

The particle size distribution of the aluminum oxide as measured using laser particle size measurement methods as known in the art may have an average particle size of between 0.6 to 2 um, preferably between 0.8 to 1.8 um, preferably between 0.8 to 1.6 um.

The aluminum oxide is of very high purity, having a total purity of greater than 99.99%, preferably greater than 99.995%, with respect to 100% pure aluminum oxide. These levels of purity correspond to total impurity levels of 100 and 50 ppm, respectively. The total purity also includes alkali and alkaline earth elements as well as low melting temperature, volatile metals, which are detrimental to application to semiconductor processing chambers.

In embodiments, step a of the method to form a joined ceramic body may further comprise providing powders of at least one rare earth oxide selected from the group consisting of Y2O3, La2O3, CeO2, Nd2O3, Pm2O3, Sm2O3, Eu2O3, Gd2O3, Tb4O7, Dy2O3, Ho2O3, Er2O3, Tm2O3, Yb2O3, Lu2O3 and combinations thereof wherein the rare earth oxides each have a purity of 99.99% and higher.

The rare earth oxide selected from the group consisting of Y2O3, La2O3, CeO2, Nd2O3, Pm2O3, Sm2O3, Eu2O3, Gd2O3, Tb4O7, Dy2O3, Ho2O3, Er2O3, Tm2O3, Yb2O3, Lu2O3 and combinations of these may have a surface area as measured by BET methods as known to those skilled in the art which may be at least 2 m2/g, preferably at least 4 m2/g, preferably at least 6 m2/g, from between 2 to 10 m2/gm, preferably between 4 m2/g to 8 m2/g.

The group of rare earth oxides as disclosed herein may have an average particle size distribution as measured using laser particle size measurement methods as known in the art of between 2 to 15 $\mu$m, preferably between 3 to 10 $\mu$m, preferably between 4 to 8 um.

The group of rare earth oxides as disclosed herein may have a total purity of greater than 99.99%, preferably greater than 99.995%, preferably greater than 99.999% with respect to 100% of the compound oxide purity. These levels of purity correspond to total impurity levels of 100, 50, and 10 ppm, respectively. The total purity also includes alkali and alkaline earth elements as well as low melting temperature, volatile metals, which are detrimental to application to semiconductor processing chambers.

The selection of the silicon dioxide and metal oxide powders and their relative amounts is made dependent upon the product specific application requirements, and the desired properties for the joining layer formed from the joining material during a sintering process as disclosed herein. Selection of joining materials is dependent upon the desired properties of plasma resistance and specific material properties such as the coefficient of thermal expansion. The examples disclosed herein use silicon dioxide (SiO2) and joining materials of combinations of silicon dioxide (SiO2), aluminum oxide (Al2O3), and a rare earth oxide for example yttrium oxide (Y2O3). However, any number of other rare earth oxides may be used in varying amounts. Rare earth oxides may be selected from the group consisting of Y2O3, La2O3, CeO2, Nd2O3, Pm2O3, Sm2O3, Eu2O3, Gd2O3, Tb4O7, Dy2O3, Ho2O3, Er2O3, Tm2O3, Yb2O3, Lu2O3 and combinations of these as example, without limitation. The joining layer formed from the starting powders may be a glass or a glass ceramic. Dopants or additives may be incorporated into the joining layer for their specific desired properties provided therein. All starting powders are of purity at least 99.99% and greater, and free of fluorides and oxyfluorides. Table 1 lists properties of compound oxide powders useful as joining materials for forming the joining layer as disclosed herein.

| Table 1 | | | | |
|---|---|---|---|---|
| Oxide | Purity (%) | Surface Area (m2/g) | Average Particle Size (um) | d90 Particle Size (um) |
| SiO2 | 99.999 | 25 to 40 | 0.75 to 3* | 4 to 6 |
| Al2O3 | 99.99 | 8 to 18 | 1 to 3 | 5 to 7 |

(continued)

| Table 1 | | | | |
|---|---|---|---|---|
| Oxide | Purity (%) | Surface Area (m2/g) | Average Particle Size (um) | d90 Particle Size (um) |
| Y2O3 | 99.999 | 2 to 9 | 2.5 - 5.5 | 7.5 to 9.5 |
| La2O3 | 99.999 | 4 to 12 | 1 to 3 | 6 to 8 |
| * denotes average agglomerate size | | | | |

**Step a** of the method further includes mixing, blending, milling or suspending the joining material in a suspension medium as necessary to prepare the joining material for step b. In embodiments, the joining material may be in the form of a powder mixture of silicon dioxide which may preferably be a nano powder, aluminum oxide and/or the aforementioned compound oxides. In alternate embodiments, the powder mixture may be in the form of a paste containing the aforementioned powders of the joining material and a suspending medium such as for example solvents of water, ethanol, isopropanol, glycerol, and combinations thereof to form a plasma resistant composition. Additional, optional dopants may be added to any of the aforementioned forms of the joining material and/or plasma resistant composition. In embodiments, the plasma resistant composition comprises a powder mixture of between 10 and 50% by volume of the paste, between 20 and 50% by volume of the paste, preferably between 30 and 50% by volume of the paste. Selection of one or more mixing methods and a suspension medium (if used) and the amount thereof is made dependent on the method selected for application of the joining material or plasma resistant composition to the surface of the ceramic portion/s. Methods for mixing, blending or milling are as disclosed following and may be used to combine the powders into a powder mixture. In order to combine the powders to form the joining material or plasma resistant composition, the disclosed powders may be mixed according to the processes of vertical (end over end) tumble mixing, high energy ball milling or jet milling, without limitation. Ball milling and tumble mixing may be done dry or wet, in which case milling may be performed in a liquid medium such as solvent or aqueous based systems as previously mentioned, or simply using the powder mixture with or without milling media. Any of the aforementioned milling processes may use high purity media, such as aluminum oxide of purity 99.99% and/or 99.995%, to preserve the purity of the starting oxide powders, with a milling media loading by weight of from 20% to 50% of powder weight. The mixing processes as disclosed serve to maintain the purity of the joining material and/or the plasma resistant composition after mixing and may be repeated as needed for desired results. Preferable is a plasma resistant composition or joining material having a maximum particle size of between 4 and 6 um, a maximum particle size of between 4 and 5 um, preferably a maximum particle size of 4 um and less. As used herein, the plasma resistant composition may be comprised of the same or similar powders as the joining material, with the addition of a suspending medium as disclosed herein, to form a plasma resistant composition in the form of a paste. The plasma resistant composition as disclosed herein is one embodiment of the joining material.

**Step a** of the method further comprises disposing the silicon dioxide or joining material between a first ceramic portion and a second ceramic portion to form a ceramic body assembly. The selected joining material or plasma resistant composition may be applied between surfaces of various ceramic substrates which are capable of withstanding the bonding temperatures as disclosed herein to form a glass or glass ceramic joining layer between the ceramic portions. Properties of the glass or glass ceramic joining layer may be determined by the selected joining materials and their characteristics, method of mixing prior to formation of the joining layer, thermal processing during sintering and cooling, among other techniques as known to those skilled in the art.

For the embodiments disclosed herein, the silicon dioxide powder or joining material may be applied to a surface of a first ceramic portion. Application of the joining material in powder form may be done by dusting or sprinkling the powder mixture comprising the joining material on the surface of the first ceramic portion. Application of the joining material or plasma resistant composition in a suspension medium may be done by painting, spraying, dipping, spin coating, and screen printing, among others. Thereafter a surface of a second ceramic portion is brought into contact with the layer of joining material or plasma resistant composition to form the ceramic body assembly. The joining material or plasma resistant composition is applied over the surface of the substrate to be joined as disclosed above by way of example and not by way of limitation. The method of application must be compatible with the properties of the joining material or plasma resistant composition.

Ceramic portions may be selected from a variety of materials, such as Al2O3, AlN, SiAlON, SiC, Y2O3, yttrium aluminum garnet (YAG, $Y_3Al_5O_{12}$), yttrium aluminum monoclinic (YAM, $Y_4Al_2O_9$), yttrium aluminum perovskite (YAP, $YAlO_3$), mullite and combinations thereof. Selection of substrate materials may be done based upon resistance to halogen-based plasmas, mechanical strength, thermal conductivity, dielectric breakdown strength, CTE, and others. As a non-limiting example, the joining material may be placed between two similar materials varying in electrical characteristics, such as a ceramic portion of a first electrical resistivity, and a ceramic portion of a second electrical resistivity, to provide a high strength, plasma resistant bond between the two regions while maintaining the corrosion resistance provided by the aluminum oxide ceramic portions. The ceramic portions as disclosed herein may have a purity of at least 99.99% and greater, preferably 99.995% and greater, preferably 99.999% and greater. US provisional patent application number 62/829,720 entitled "controlled porosity yttrium oxide for etch applications" and US provisional patent application number 62/936821 entitled "ceramic sintered body for corrosion resistant components" disclose purities of yttrium oxide and yttrium aluminum garnet (YAG), both of which are incorporated by reference herein in their entirety.

The ceramic body assembly may be placed in a furnace for joining according to a variety of thermal profiles as disclosed herein. Fixturing and supports as necessary to maintain contact between the substrates were used during thermal treatment as familiar to one skilled in the art.

The method of making a joined ceramic body disclosed herein comprises step b increasing the temperature of the ceramic body assembly to a sintering temperature of the powder of silicon dioxide sufficient to join first and second ceramic portions to form the joined ceramic body.

In embodiments, sintering of the silicon dioxide powder and/or the joining material as disclosed herein to form the joining layer of the joined ceramic body may be achieved through direct, in situ sintering of the silicon dioxide powder or powder mixture of the joining material. This in situ sintering, which forms the joining layer from the starting oxide powders, preserves the purity of the starting materials thereby transferring them to the joining layer. Known in the art is the process of first forming or fritting a glass or glass ceramic which is thereafter ground into powder form, introducing impurities and contaminants into the glass or glass ceramic and thereby the joining layer. The ceramic body assembly of step b may be heated in a furnace at temperatures and for durations sufficient to sinter the powders comprising the silicon dioxide and/or joining material of step a) into a joining layer to form the joined ceramic body.

Joining or sintering of the ceramic body assembly to form the joined ceramic body may be performed at sintering temperatures of between 1100 to 1500°C, preferably between 1100 to 1400°C, preferably between 1100 to 1300°C, preferably between 1100 to 1200°C, preferably between 1200 to 1500°C preferably between 1300 to 1500°C, preferably between 1400 to 1500°C, preferably between 1200 to 1400°C. Joining of the ceramic body assembly may be performed at sintering times of between 1 to 8 hours, preferably between 1 to 6 hours, preferably between 1 to 4 hours, preferably between 6 to 8 hours, preferably between 4 to 8 hours, preferably between 3 to 5 hours. Heating rates may be between 1°C/minute and 20°C/minute, between 1°C/minute and 10°C/minute, and cooling rates may be between 0.5 °C/minute and 20°C/minute, preferably between 0.75 C/minute and 15°C/minute, preferably between 1°C/minute and 10°C/minute. The sintering process transforms the joining material into the joining layer as disclosed. The ceramic body assemblies were sintered under ambient pressure and atmospheric conditions.

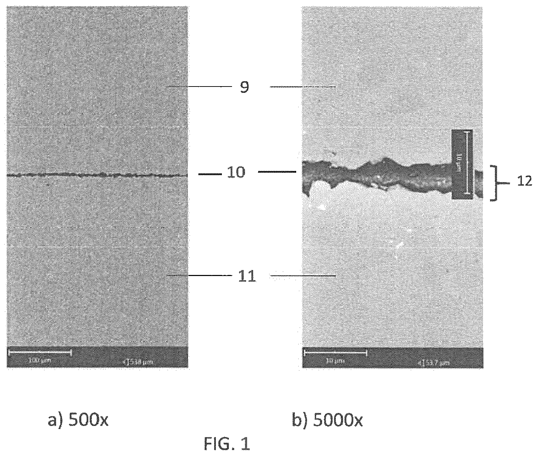

FIG. 1 depicts a joined ceramic body according to an embodiment as disclosed wherein first and second ceramic portions 9 and 11 respectively, may be bonded using a glass or glass ceramic based joining layer 10 comprising combinations of silicon dioxide, aluminum oxide and in embodiments also rare earth oxides such as rare earth oxides selected from the group consisting of $Y_2O_3$, $La_2O_3$, $CeO_2$, $Nd_2O_3$, $Pm_2O_3$, $Sm_2O_3$, $Eu_2O_3$, $Gd_2O_3$, $Tb_4O_7$, $Dy_2O_3$, $Ho_2O_3$, $Er_2O_3$, $Tm_2O_3$, $Yb_2O_3$, $Lu_2O_3$ and combinations thereof. The silicon dioxide and/or the joining material forming the joining layer upon sintering may be dispersed in a suspension medium to form a paste ranging from about 5 volume % to 50 volume %, preferably between 10 and 50% by volume, between 20 and 50% by volume of the paste, preferably between 30 and 50% by volume of the paste. In embodiments, the joining material may have a maximum particle size of 6 um and less. A bond thickness, 12, of between about 0.1 to 20 um, between 0.1 to 15 um, between 0.1 to 10 um, preferably between 0.1 to 5 um may be achieved, however other bond thicknesses may be contemplated, dependent upon the characteristics of the starting joining materials, such as composition of the joining materials and ceramic portions, particle size distribution and maximum particle or agglomerate size. As depicted in FIG. 1, no reaction between the ceramic portions 9 & 11 and the joining layer 10 is observed. The joining layer 10 between interfaces of the ceramic portions 9 and 11 does not have a transition area and is uniform in phase distribution throughout. The joining layer 10 may have a glass or a glass ceramic phase uniformly distributed between the ceramic portions, which is free of fluorides or oxyfluorides. A transition area or region as defined herein represents an area or region formed between interfaces of the ceramic portion and the joining layer by a chemical reaction to form a region differing in composition, crystalline phase, or other characteristics. Each of the joined ceramic body, joining layer, joining material and plasma resistant composition as disclosed herein are free of fluorides and oxyfluorides and are free of transition areas as defined herein.

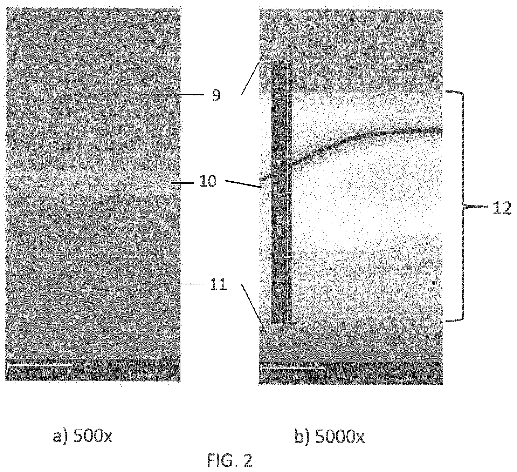

FIG. 2 illustrates a joined ceramic body not according to an embodiment as disclosed wherein ceramic portions comprised of aluminum oxide were bonded at 1400°C for 4 hours using a glass forming joining material comprising high purity (>99.999%) silicon dioxide granulate dispersed in a 50 volume % aqueous paste. The granulate had a d50 particle size of 85 um and a d90 particle size of more than 200 um. A bond thickness 12 of about 35 um was measured and cracking was observed in the joining layer, 10. The large granulate particle sizes of the silicon dioxide and differences in coefficient of thermal expansion between the ceramic portion/s 9, 11 and the joining layer 10 may have resulted in cracking of the joining layer. Tables 2 and 3 list ceramic portions and various joining materials combined to make the joined ceramic bodies as disclosed. The glass ceramic joining material used to form the joining layer in accordance with Table 3 may be a mixture of powders as disclosed herein comprising about 50% $SiO_2$, 25% $Y_2O_3$ and 25% $Al_2O_3$ by weight. Other compositions and ratios of joining materials may be used dependent upon the selection of ceramic portions.

In embodiments, the glass ceramic joining material may be comprised of a powder mixture of about 40% SiO2, about 25% Y2O3 and about 35% Al2O3 by weight.

| Table 2 Glass Joining Layer | | | | | |
|---|---|---|---|---|---|
| Example | ceramic portion 1 | ceramic portion 2 | Joining Material | T (Celsius)/t (hours) | Join Result |
| 1 | Al2O3 | Al203 | SiO2 | 1400/4 | Acceptable |
| 2 | Al2O3 | Al203 | SiO2 | 1200/4 | Acceptable |
| 3 | Al2O3 | Al203 | SiO2 | 1000/8 | Unacceptable |
| 5 | Al2O3 | Y203 | SiO2 | 1400/4 | Acceptable |
| 6 | Al2O3 | Al2O3 | Granulated SiO2 | 1400/4 | Cracking |
| 7 | Y203 | Y203 | SiO2 | 1400/4 | Acceptable |
| 8 | YAG | YAG | SiO2 | 1400/4 | Acceptable |

| Table 3 Glass Ceramic Joining Layer | | | | | |
|---|---|---|---|---|---|
| Example | ceramic member 1 | ceramic member 2 | Joining Material | T (Celsius)/t (hours) | Join Result |
| 1 | Al2O3 | Al203 | SiO2/Al2O3/Y203 | 1400/4 | Acceptable |
| 2 | Al2O3 | Al203 | SiO2/Al2O3/Y2O3 | 1200/4 | Acceptable |
| 3 | Al2O3 | Al203 | SiO2/Al2O3/Y2O3 | 1000/8 | Unacceptable |
| 4 | Al2O3 | Y203 | SiO2/Al2O3/Y2O3 | 1400/4 | Unacceptable |

Although the embodiments as disclosed do not require use of external pressure, externally applied pressures between 0.01 and 1.4 MPa, preferably between 0.01 and 0.7 MPa, preferably between 0.01 and 0.35 M, preferably between 0.01 and 0.14 MPa, preferably between 0.01 and 0.07 MPa may be used if desired.

In embodiments, the sintering profile may be adjusted to a temperature and time sufficient to permit the formation of a glass ceramic joining layer between the substrates from the powder mixture. The resultant properties and composition of the glass ceramic joining layer will be determined by the powder mixture composition, substrate material, and thermal profile used during the joining process, in particular the cooling rate to allow for crystallization of the joining material upon cooling.

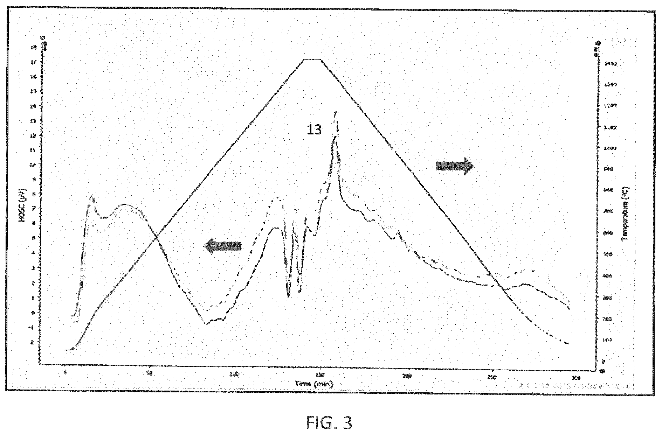

FIG. 3 illustrates differential scanning calorimetry (DSC) results as performed in the art for the glass ceramic joining layer comprising silicon dioxide, aluminum oxide and yttrium oxide as disclosed herein. Crystallization of the joining material to form a glass ceramic as disclosed herein may be observed as shown by exothermic peaks 13 at between about 1000 and 1400°C. Two measurements were performed, and consistent results are depicted in FIG. 3.

The joining layer may vary in the relative amounts of glass or amorphous and crystalline or ceramic phases dependent upon the composition of the joining material, the thermal treatment, in particular the cooling rate, and the presence of additives or dopants. The ceramic phase of the joining layer may contain an element selected from the group consisting of Y, La, Ce, Pr, Nd, Pm, Sm, Eu, Gd, Tb, Dy, Ho, Er, Tm, Yb and Lu and combinations of these. For application as joining materials in semiconductor processing chambers, very high purity materials are required. Advantageously, use of the joining material as disclosed results in a high purity, alkali and/or alkaline earth free glass or glass ceramic composition with high join strength which is resistant to halogen based plasmas. In embodiments, dopants may be used to enhance specific properties such as viscosity of the glass ceramic during sintering, electrical resistivity, coefficient of thermal expansion, degree of crystallinity in the glass ceramic, and others. The high purity bonding material compositions as disclosed herein may result in similar or improved etch performance beyond that of commercially available structures in use as semiconductor processing chamber components.

The method as disclosed herein comprises step c lowering the temperature of the joined ceramic body. The relative amounts of the amorphous and crystalline phases present in the glass ceramic joining layer may be affected by the cooling rate during lowering the temperature of the joined ceramic body. Crystallization is a time dependent process whereby higher cooling rates reduce the amount of time for crystallization to occur and thus may result in a lower amount of crystalline phase and a correspondingly higher amount of amorphous phase in the glass ceramic joining layer. Accordingly, lower cooling rates may increase the amount of time for crystallization to occur and thus may result in a greater amount of crystalline phase and may result in a correspondingly lower amount of amorphous phase in the glass ceramic joining layer. The thermal treatment as disclosed herein may be modified to influence the amount of crystalline phase present in the glass ceramic joining layer. The amount of amorphous and crystalline phases may also be affected by other variables such as joining material composition and particle size distribution, presence of dopants, purity levels in the starting materials, among others. Cooling rates of between 0.5 °C/minute and 20°C/minute, preferably between 0.75 C/minute and 15°C/minute, preferably between 1°C/minute and 10°C/minute may be used. Cooling may be performed under ambient conditions or in embodiments under forced convection.

The method as disclosed herein optionally further comprises **step d)** machining the joined ceramic body to create a joined ceramic body component for use in a semiconductor processing chamber. Machining may be performed as known to those skilled in the art to form a joined ceramics body component from the joined ceramic body as disclosed herein. Examples of these may be selected from the group consisting of a dielectric window or RF window, a ring, a nozzle or a gas injector, a shower head, a gas distribution plate, an etch chamber liner, a plasma source adapter, a gas inlet adapter, a diffuser, an electronic wafer chuck, a chuck, a puck, a mixing manifold, an ion suppressor element, a faceplate, an isolator, a spacer, and/or a protective ring in etch chambers. Use of the ceramic portions, compound oxide powders, joining materials and methods as disclosed herein may be particularly suited for the preparation of large joined ceramic bodies, for example of diameters between 100 to 600 mm as necessary for use in state of the art semiconductor processing chambers. For example, in one embodiment, the joined ceramic body may be formed in a disk shape having a diameter from 100 mm to 600 mm in diameter and across a range of thicknesses, from 5 mm to 60 mm. In another embodiment, the joined ceramic body may be formed in a disk shape having a diameter from 100 mm to 600 mm in diameter. In another embodiment, the joined ceramic body may be formed in a disk shape having a diameter from 100 mm to 406 mm in diameter. In other embodiments, the joined ceramic body may have a size of from 200 mm to 600 mm, preferably from 300 to 600 mm, preferably from 350 to 600 mm, preferably from 400 to 600 mm, more preferably from 450 to 600 mm, more preferably from 500 to 600 mm, more preferably 550 to 600 mm, each with regard to a longest dimension of the joined body.

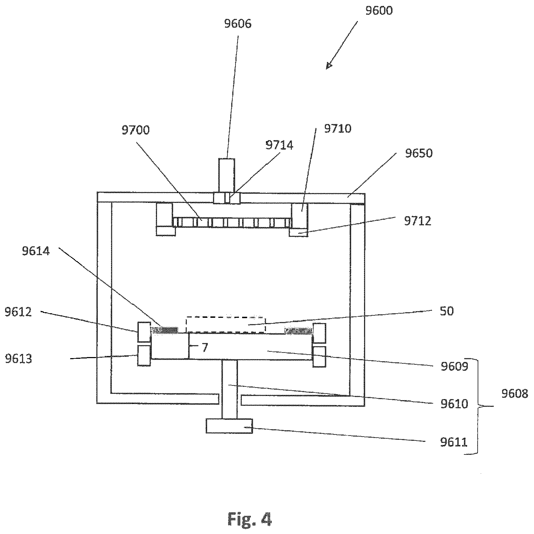

As shown in **FIG. 4**, another embodiment of the technology as disclosed herein may include a semiconductor processing system 9600, also called processing system. Processing system 9600 comprises a vacuum chamber 9650, a vacuum source, and a chuck 9608 on which a wafer 50, also denoted as semiconductor substrate, is supported. A showerhead 9700 forms an upper wall or is mounted beneath an upper wall of the vacuum chamber 9650. The ceramic showerhead 9700 includes a gas plenum in fluid communication with a plurality of showerhead gas outlets for supplying process gas to the interior of the vacuum chamber 9650. The showerhead 9700 is in fluid communication with a gas delivery system 9606. Furthermore, the showerhead 9700 may comprise a central opening configured to receive a central gas injector (also referred to as nozzle), 9714. An RF energy source energizes the process gas into a plasma state to process the semiconductor substrate. The flow rate of the process gas supplied by the central gas injector 9714 and the flow rate of the process gas supplied by the ceramic showerhead can be independently controlled. The showerhead 9700, the gas delivery system 9606 and the central gas injector 9714 may be made from the joined ceramic body as disclosed herein.

System 9600 may further include an electrostatic chuck 9608 that is designed to carry a wafer 50. The chuck 9608 may comprise a puck 9609, for supporting the wafer 50. The puck 9609 may be formed from the joined ceramic body as disclosed herein and may have a chucking electrode disposed within the puck proximate a support surface of the puck 9609 to electrostatically retain the wafer 50 when disposed on the puck 9609. The chuck 9608 may comprise a base 9611 having a ring-like extending to support the puck 9609; and a shaft 9610 disposed between the base and the puck to support the puck above the base such that a gap is formed between the puck 9609 and the base 9610, wherein the shaft 9610 supports the puck proximate a peripheral edge of the puck 9609. Chuck 9608 and puck 9609 may be made from the joined ceramic body as disclosed herein.

Parts of the surface of the showerhead 9700 may be covered with a shield ring 9712. Parts of the surface of the showerhead 9700, especially radial sides of the surface of the showerhead 9700 may be covered with an upper shield ring 9710. Shield ring 9712 and upper shield ring 9710 may be made from the joined ceramic body as disclosed herein.

Parts of the supporting surface of the puck 9609 may be covered with a cover ring 9614. Further parts of the surface of the puck 9609 may be covered with a top shield ring 9612 and/or a shield ring 9613. Shield ring 9613, cover ring 9614 and top shield ring 9612 may be made from the joined ceramic body as disclosed herein.

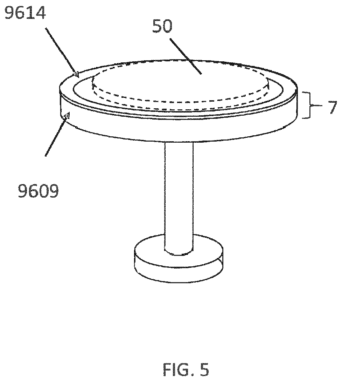

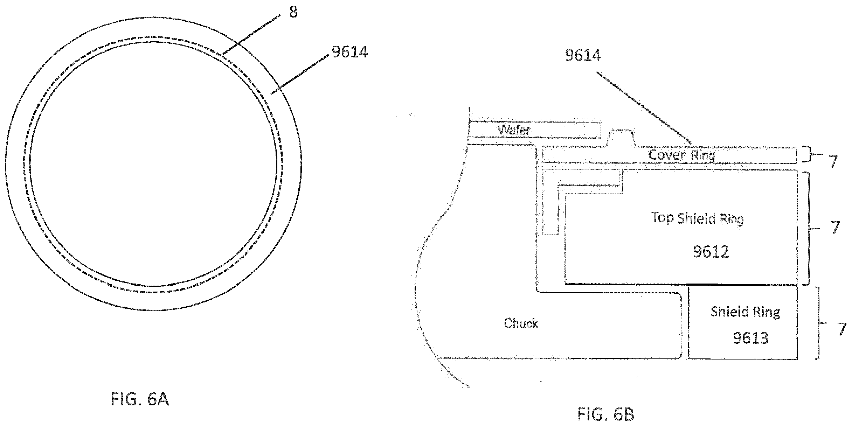

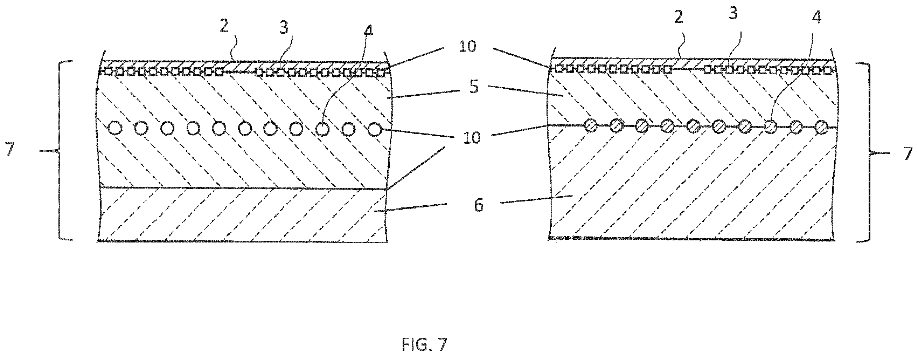

Depicted in **FIG. 5** is a wafer support assembly comprising a puck 9609 which may be at least part of an electronic wafer chuck or electrostatic chuck (ESC), and cover ring 9614 each of which may have embedded features such as wires, traces, mesh, a coil shape, a sheet, a screen, etc. in a cross section 7 as depicted in **FIGS. 6A**, **6B** and FIG. 7.

**FIG. 6A** illustrates a plan view of a cover ring 9614 formed from the joined ceramic body as disclosed with an embedded element 8 which may be a wire, a trace, a mesh, a screen, a coil shape, a screen, and the like. Other configurations and embodiments of embedded element 8 are within the scope of the disclosure. **FIG. 6B** shows a cross section view of cover ring 9614, top shield ring 9612 and shield ring 9613 which may be formed from the joined ceramic body as disclosed and having embedded or laminated elements as depicted in **FIG. 7.**

**FIG. 7** illustrates a cross section view of an exemplary joined ceramic body having a top layer 2 which may be a dielectric layer; electrodes 3 which may be embedded metal or resistive features made for example of tungsten carbide or other metals; resistive element 4 which may be made from materials having a resistivity selected for compatibility with ceramic portions 5 and 6, for example when ceramic portions 5 and 6 are aluminum oxide, 4 may be niobium or platinum; wherein elements 3 and 4 may be configured according to application specific requirements, and ceramic region 5 and ceramic region 6 may comprise a number of ceramic portions as disclosed herein and combinations thereof. For example, resistive element 4 may be disposed in a 2D or 3D configuration such that it may provide control of heating across a volume of the ceramic portions 5 or 6. The joining layer 10 formed by the materials and methods as disclosed herein may be disposed between ceramic portions 5 and 6, also between the ceramic portions and electrodes 3 and resistive elements 4, and combinations thereof to provide a plasma resistant bond to the joined ceramic component.

Properties of the joined ceramic body component, such as corrosion and erosion resistance, coefficient of thermal expansion, thermal conductivity, and dielectric breakdown strength among others may be determined at least in part by the materials selected for use forming the joining layer. Use of highly pure silicon dioxide and the joining materials as disclosed herein forms a glass or a glass ceramic joining layer which provides a high strength bond between ceramic portions while maintaining resistance to halogen based plasmas. The aforementioned properties of the joined ceramic body and/or component may also be affected by the thickness of the joining layer. Minimizing the thickness of this layer may provide increased resistance to plasma erosion and corrosion during use and decrease stress within the layer. Therefore, it is desirable to have a bond thickness that is, for example, between 0.1 and 20 um in thickness, between 0.1 and 15 um in thickness, between 0.1 and 10 um in thickness, between 0.1 and 8 um in thickness, preferably between 0.1 and 5 um in thickness, between 3 and 20 um in thickness, between 5 and 20 um in thickness, preferably between 10 and 20 um in thickness, between 15 and 20 um in thickness. The joining layer enables the fabrication of ceramic bodies and components from a wide range of materials capable of supporting greater design complexity. As example, FIG. 5 depicts a wafer support assembly having a puck, 9609 which may be a part of a chuck or electronic wafer chuck or electrostatic chuck (ESC), and a cover ring 9614. The puck and/or cover ring may have multiple layers and embedded materials as illustrated in the cross section 7 of FIG. 7.

Exemplary embodiments:

For examples 1 to 4, the joining material selected for evaluation contained compound oxides by weight of 50% silicon dioxide, 25% aluminum oxide and 25% yttrium oxide. For examples 1 through 5, 7 and 9, high purity silicon dioxide as disclosed herein was used to bond the ceramic portions. All starting powders were of purity at least 99.99% and greater, and free of fluorides and oxyfluorides. Properties of the starting oxides are listed in Table 1.

The joining material was dispersed at 40% solids loading in an aqueous suspending medium. Samples were sintered at varying temperatures and times as disclosed following. Across all embodiments as disclosed herein, no transition area was exhibited. A transition area or region as defined herein represents an area or region formed between interfaces of the alumina ceramic portions and the joining layer by a chemical reaction between them to form a region differing in composition, crystalline phase, or other characteristics.

Example 1: A joined ceramic body was formed from a joining material comprising aluminum oxide, yttrium oxide and silicon dioxide each having purity, particle size distribution and surface area as disclosed herein, prepared in a 40 volume percent aqueous paste, and disposed between ceramic portions made of aluminum oxide having a purity of at least 99.99% and higher to form a ceramic body assembly. The joining material formed a glass ceramic as depicted in accordance with DSC results of FIG. 3. The ceramic body assembly was sintered at a sintering temperature of 1400°C for 4 hours under ambient pressure in air to form a joined ceramic body. The joining layer had a bond thickness of between 2 to 5 um, and acceptable bonding between the ceramic portions was achieved. The joining layer was observed to be uniform between interfaces of the ceramic portions, and without cracking or fissures. This is depicted in **FIG. 1 a)** at 500x magnification, and b) at 5000x magnification. As evidenced by FIG. 1, no reaction between the ceramic portions and the joining material is observed. The joining layer between interfaces of the aluminum oxide portions does not have a transition area and is uniform in phase distribution throughout. The joining layer was comprised of a glass ceramic phase between the ceramic portions which is free of fluorides and/or oxyfluorides. Acceptable bonding between the ceramic portions was also achieved when silicon dioxide powder having the surface area, purity and particle size characteristics as disclosed in Example 5 was disposed between the ceramic portions and sintered in accordance with this example.

Example 2: A joined ceramic body was formed from the glass ceramic joining material as disclosed in Example 1, disposed between ceramic portions made of aluminum oxide as in Example 1 to form a ceramic body assembly. The ceramic body assembly was sintered at 1200°C for 4 hours under ambient pressure in air to form a joined ceramic body. Acceptable bonding between the ceramic portions was achieved using the joining material as disclosed herein. Acceptable bonding between the ceramic portions was also achieved when silicon dioxide powder having the surface area, purity and particle size characteristics as disclosed herein was disposed between the ceramic portions and sintered in accordance with this example.

Example 3: A joined ceramic body was formed from the glass ceramic joining material as disclosed in Example 1, disposed between ceramic portions made of aluminum oxide as disclosed in Example 1 to form a ceramic body assembly. The ceramic body assembly was sintered at 1000°C for 8 hours under ambient pressure in air to form a joined ceramic body. Detachment of the ceramic sintered body was observed due to insufficient bonding between the ceramic portions and the joining material. Detachment of the ceramic sintered body was also observed when silicon dioxide powder having the surface area, purity and particle size characteristics as disclosed herein was disposed between the ceramic portions due to insufficient bonding between the ceramic portions and the joining material.

Example 4: A joined ceramic body was formed from the joining material as disclosed in Example 1, disposed between ceramic portions made of aluminum oxide and yttrium oxide, each having a purity of at least 99.99% and greater to form a ceramic body assembly. The ceramic body assembly was sintered at 1400°C for 4 hours under ambient pressure in air to form a joined ceramic body. Detachment of the ceramic sintered body was observed due to insufficient bonding between the ceramic portions and the joining material.

Example 5: A joined ceramic body was formed from silicon dioxide powder having a purity of at least 99.999% and higher, a surface area of between 25 and 40 m2/g, and an average particle size of between 20 to 200 nm as disclosed herein was disposed between ceramic portions made of aluminum oxide and yttrium oxide, each having a purity of at least 99.99% and greater to form a ceramic body assembly. The ceramic body assembly was sintered at 1400°C for 4 hours under ambient pressure in air to form the joined ceramic body. Acceptable bonding between the ceramic portions was achieved using the silicon dioxide powder as disclosed herein.

Example 6: A joined ceramic body not in accordance with the materials and methods as disclosed was made of aluminum oxide ceramic portions having purity of at least 99.99% and greater to form a ceramic body assembly. In this example, high purity (>99.999%) granulated $SiO_2$ powder, having an average agglomerate size of between 60 to 100 um and a d90 agglomerate size of between 200 to 250 um was used to form the joining layer. The silica granulate was dispersed in a 50 volume % aqueous paste. The ceramic body assembly was sintered at 1400°C for 4 hours under ambient pressure in air to form a joined ceramic body. A bond thickness of 35 um resulted, as depicted in **FIG. 2** a) at a 500x magnification, and 2 b) at 5000x magnification. Although bonding occurred between the ceramic portions and silicon dioxide, significant cracking was observed within the joining layer. Greater stresses may be placed upon this thicker, predominately or fully glass bond layer dependent upon the thermal expansion characteristics of the ceramic portions, exacerbating the observed cracking.

Example 7: A joined ceramic body was formed from silicon dioxide powder having a purity of at least 99.999% and higher, a surface area of between 25 and 40 m2/g, and an average particle size of between 20 to 200 nm as disclosed herein was disposed between ceramic portions made of yttrium oxide having a purity of at least 99.99% and greater to form a ceramic body assembly. The ceramic body assembly was sintered at 1400°C for 4 hours under ambient pressure in air to form the joined ceramic body. Acceptable bonding between the ceramic portions was achieved using the silicon dioxide powder as disclosed herein.

Example 8: A joined ceramic body was formed from silicon dioxide powder having a purity of at least 99.999% and higher, a surface area of between 25 and 40 m2/g, and an average particle size of between 20 to 200 nm as disclosed herein was disposed between ceramic portions made of yttrium aluminum oxide, garnet structure (YAG, $Y_3Al_5O_{12}$), having a purity of at least 99.99% and greater to form a ceramic body assembly. The ceramic body assembly was sintered at 1400°C for 4 hours under ambient pressure in air to form the joined ceramic body. Acceptable bonding between the ceramic portions was achieved using the silicon dioxide powder as disclosed herein.

Tables 2 and 3 summarize the joined ceramic bodies according to embodiments as disclosed herein.

Reference Number Listing

| Figure/s | Reference Number | Description |
| --- | --- | --- |
| 7 | 2 | top layer |
| 7 | 3 | electrode |
| 7 | 4 | resistive element |
| 7 | 5 | ceramic portion |
| 7 | 6 | ceramic portion |

(continued)

| Figure/s | Reference Number | Description |
|---|---|---|
| 4, 5, 6B, 7 | 7 | cross section |
| 6A | 8 | embedded element |
| 1, 2 | 9, 11 | ceramic portion/s |
| 1,2 | 10 | joining layer |
| 1,2 | 12 | bond thickness |
| 3 | 13 | exothermic peaks |
| 4, 5 | 50 | wafer |
| 4 | 9600 | semiconductor processing system |
| 4 | 9606 | gas delivery system |
| 4 | 9608 | chuck |
| 4, 5 | 9609 | puck |
| 4 | 9610 | shaft |
| 4 | 9611 | base |
| 4, 6B | 9612 | top shield ring |
| 4, 6B | 9613 | shield ring |
| 4, 5, 6A, 6B | 9614 | cover ring |
| 4 | 9700 | showerhead |
| 4 | 9710 | upper shield ring |
| 4 | 9712 | shield ring |
| 4 | 9714 | central gas injector |
| 4 | 9650 | vacuum chamber |

A number of embodiments of the invention have been disclosed. Nevertheless, it will be understood that various modifications may be made without departing from the spirit and scope of the invention. Accordingly, other embodiments are within the scope of the following claims.

Finally, the present invention will be summarized by referring to the following items:

1) A joined ceramic body, comprising:

    a. a first ceramic portion comprising a first ceramic;

    b. a second ceramic portion comprising a second ceramic;

    c. a joining layer between interfaces of the first ceramic portion and the second ceramic portion,

wherein the joining layer has a bond thickness of between 0.1 and 20 um and comprises silicon dioxide having a total impurity content of 20 ppm and less.

2) The joined ceramic body of item 1 wherein the joining layer is formed from a powder having a specific surface area of 25 $m^2$/g and 50 $m^2$/g as measured by BET methods prior to a sintering step.

3) The joined ceramic body of any one of the preceding items wherein the joining layer has a total impurity content of 10 ppm and less.

4) The joined ceramic body of any one of the preceding items wherein the joining layer has a total impurity content of 5 ppm and less.

5) The joined ceramic body of any one of the preceding items wherein the joining layer has a purity of 99.999% and higher.

6) The joined ceramic body of any one of the preceding items wherein the joining layer has a purity of 99.9995% and higher.

7) The joined ceramic body of any one of the preceding items wherein the first and second ceramic portions are comprised of the same ceramic.

8) The joined ceramic body of any one of the preceding items wherein the first and second ceramic are comprised of different ceramics.

9) The joined ceramic body of any one of the preceding items wherein each of the first and second ceramic portions are selected from the group consisting of aluminum oxide, yttrium oxide, aluminum nitride, yttrium aluminum garnet (YAG; $Y_3Al_5O_{12}$), yttrium aluminum monoclinic (YAM, $Y_4Al_2O_9$), yttrium aluminum perovskite (YAP YAlO$_3$), silicon carbide, quartz, SiAlON materials and combinations thereof.

10) The joined ceramic body of any one of the preceding items wherein the first ceramic portion comprises yttrium oxide and the second ceramic portion comprises aluminum oxide.

11) The joined ceramic body of any one of the preceding items wherein the joining layer further comprises aluminum oxide.

12) The joined ceramic body of any one of the preceding items wherein the joining layer further comprises yttrium oxide.

13) The joining layer of items 11 and 12 wherein the aluminum oxide and yttrium oxide each have a purity of 99.99% and higher.

14) The joined ceramic body of any one of the preceding items wherein the joining layer has a total purity of 99.995% and higher.

15) The joined ceramic body of any one of the preceding items wherein the joining layer has a total purity of 99.999% and higher.

16) The joined ceramic body of any one of the preceding items, wherein the joining layer has a bond thickness of between 0.1 and 10 um.

17) The joined ceramic body of any one of the preceding items, wherein the joining layer has a bond thickness of between 0.1 and 5 um.

18) The joined ceramic body of any one of the preceding items wherein the joining layer has an alkali or alkali earth impurity content of 5 ppm and less.

19) The joined ceramic body of any one of the preceding items wherein the joining layer further comprises a rare earth oxide selected from the group consisting of Y203, La2O3, CeO2, Nd2O3, Pm2O3, Sm2O3, Eu2O3, Gd2O3, Tb4O7, Dy2O3, Ho2O3, Er2O3, Tm2O3, Yb2O3, Lu2O3 and combinations thereof having a purity of 99.99% and higher.

20) The joined ceramic body of any one of the preceding items wherein the joining layer further comprises an element selected from the group consisting of Y, La, Ce, Pr, Nd, Pm, Sm, Eu, Gd, Tb, Dy, Ho, Er, Tm, Yb and Lu and combinations thereof.

21) The joined ceramic body of any one of the preceding items wherein the joining layer comprises a glass.

22) The joined ceramic body of any one of the preceding items wherein the joining layer comprises a glass ceramic having a crystalline form in an amount between 1% and 99% by volume of the joining layer.

23) The joined ceramic body of any one of the preceding items wherein the joining layer comprises a glass ceramic having a crystalline form in an amount between 10% and 99% by volume of the joining layer.

24) The joined ceramic body of any one of the preceding items wherein the joining layer comprises a glass ceramic having a crystalline form in an amount between 20% and 99% by volume of the joining layer.

25) The joined ceramic body of any one of the preceding items wherein the joining layer comprises a glass ceramic having a crystalline form in an amount between 1% and 90% by volume of the joining layer.

26) The joined ceramic body of any one of the preceding items wherein the joining layer comprises a glass ceramic having a crystalline form in an amount between 1% and 80% by volume of the joining layer.

27) The joined ceramic body of any one of the preceding items wherein the joining layer comprises a glass ceramic having a crystalline form in an amount between 1% and 70% by volume of the joining layer.

28) The joined ceramic body of any one of the preceding items wherein the joining layer comprises a glass ceramic having a crystalline form in an amount between 50% and 80% by volume of the joining layer.

29) The joined ceramic body of any one of the preceding items wherein the first and second ceramic portions are aluminum oxide.

30) The joined ceramic body of any one of the preceding items wherein the first and second ceramic portions are selected from the group consisting of: Al2O3, AlN, SiAlON, SiC, Y2O3, yttrium aluminum garnet (YAG, $Y_3Al_5O_{12}$), yttrium aluminum monoclinic (YAM, $Y_4Al_2O_9$), yttrium aluminum perovskite (YAP, YAlO$_3$), mullite and combinations thereof.

31) The joined ceramic body of any one of the preceding items wherein the joining layer has a coefficient of thermal expansion within 0 to 5% of either the first or second ceramic portions.

32) The joined ceramic body of any one of the preceding items wherein the first and second ceramic portions have a purity of 99.99% and higher.

33) The joined ceramic body of any one of the preceding items wherein the first and second ceramic portions have a purity of 99.999% and higher.

34) A method of making a joined ceramic body, the method comprising:

a. disposing a powder of silicon dioxide between surfaces of a first ceramic portion and a second ceramic portion to form a ceramic body assembly;

b. increasing the temperature of the ceramic body assembly to a sintering temperature of the powder of silicon dioxide sufficient to join first and second ceramic portions to form the joined ceramic body; and

c. lowering the temperature of the joined ceramic body,

wherein the silicon dioxide has a specific surface area as measured by BET methods of at least 25 $m^2/g$ and a purity of 99.999% and higher, characterized in that the process is carried out under condition to prepare a joined ceramic body having characteristics as disclosed in any one of the preceding items.

35) The method according to item 34 wherein step a. further comprises a powder of aluminum oxide wherein the aluminum oxide has a purity of 99.99% and higher.

36) The method according to items 34 or 35 wherein step a. further comprises a powder of at least one rare earth oxide selected from the group consisting of $Y_2O_3$, $La_2O_3$, $CeO_2$, $Nd_2O_3$, $Pm_2O_3$, $Sm_2O_3$, $Eu_2O_3$, $Gd_2O_3$, $Tb_4O_7$, $Dy_2O_3$, $Ho_2O_3$, $Er_2O_3$, $Tm_2O_3$, $Yb_2O_3$, $Lu_2O_3$ and combinations thereof having a purity of 99.99% and higher.

37) The method according to items 34 to 36 wherein the sintering temperature of step b. is between 1100 and 1500°C.

38) The method according to any one of items 34 to 37 wherein the powders are in the form of a paste comprising a liquid selected from the group consisting of water, ethanol, isopropanol, glycerol, and combinations thereof.

39) The method according to any one of items 34 to 38 further comprising the step of:

d. machining the joined ceramic body to create a joined ceramic body component for use in a semiconductor processing chamber.

40) The method according to any one of items 34 to 39 wherein the ceramic body component is selected from the group consisting of: a dielectric window or RF window, a ring, a nozzle or a gas injector, a shower head, a gas distribution plate, an etch chamber liner, a plasma source adapter, a gas inlet adapter, a diffuser, an electronic wafer chuck, a chuck, a puck, a mixing manifold, an ion suppressor element, a faceplate, an isolator, a spacer, and/or a protective ring in etch chambers.

41) A joined ceramic body for production of semiconductor chamber components made by the process of any one of items 34 to 40.

42) A joined ceramic body according to anyone of items 1 to 33 having a size of from 100 mm to 600 mm, preferably from 200 to 600 mm, preferably from 300 to 600 mm, preferably from 400 to 600 mm, more preferably from 450 to 600 mm, more preferably from 500 to 600 mm, more preferably 550 to 600 mm, each with regard to the longest extension of the ceramic body.

43) A plasma resistant composition, comprising:

a. silicon dioxide having a particle size of between 30 and 200 nm and a specific surface area as measured by BET methods of between 25 m2/g and 50 m2/g;

b. aluminum oxide; and

c. at least one rare earth oxide selected from the group consisting of $Y_2O_3$, $La_2O_3$, $CeO_2$, $Nd_2O_3$, $Pm_2O_3$, $Sm_2O_3$, $Eu_2O_3$, $Gd_2O_3$, $Tb_4O_7$, $Dy_2O_3$, $Ho_2O_3$, $Er_2O_3$, $Tm_2O_3$, $Yb_2O_3$, $Lu_2O_3$ and combinations thereof; and

d. a suspension medium,

wherein the plasma resistant composition comprises a paste.

44) The plasma resistant composition of item 43 wherein the silicon dioxide has a total purity of at least 99.999% and higher.

45) The plasma resistant composition of any of items 43 and 44 having a total purity of at least 99.995% and higher.

46) The plasma resistant composition of any one of items 43 to 45 wherein the suspension medium comprises a liquid selected from the group consisting of water, ethanol, isopropanol, glycerol, and combinations thereof.

47) The plasma resistant composition of any one of items 43 to 46 having a maximum particle size of between 4 and 6 microns.

48) The plasma resistant composition of any one of items 43 to 47 wherein the aluminum oxide has a purity of 99.99% and higher.

49) The plasma resistant composition of any one of items 43 to 48 wherein the at least one rare earth oxide selected from the group consisting of Y2O3, La2O3, CeO2, Nd2O3, Pm2O3, Sm2O3, Eu2O3, Gd2O3, Tb4O7, Dy2O3, Ho2O3, Er2O3, Tm2O3, Yb2O3, Lu2O3 and combinations thereof has a purity of 99.99% and higher.

50) The plasma resistant composition of any one of items 43 to 49 wherein the silicon dioxide is present in an amount of 50% by weight, aluminum oxide is present in an amount of 25% by weight and the rare earth oxide is present in an amount of 25% by weight.

51) A joined ceramic body, comprising:

a. first and second ceramic portions of aluminum oxide;
b. a joining layer between interfaces of the first and second ceramic portions having a bond thickness of between 0.1 and 20 um,

wherein the first and second ceramic portions have a purity of 99.99% and higher, the joining layer comprises silicon dioxide having a total impurity content of 20 ppm and less, aluminum oxide having a total impurity content of 50 ppm and less, and yttrium oxide having a total impurity content of 50 ppm and less.

52) A joined ceramic body, comprising:

a. first and second ceramic portions of yttrium oxide;
b. a joining layer between interfaces of the first and second ceramic portions,

wherein the first and second ceramic portions have a purity of 99.999% and higher and the joining layer comprises silicon dioxide having a total impurity content of 20 ppm and less, and a bond thickness of between 0.1 and 20 um.

53) A joined ceramic body, comprising:

a. first and second ceramic portions of yttrium aluminum oxide garnet (YAG, $Y_3Al_5O_{12}$);
b. a joining layer between interfaces of the first and second ceramic portions,

wherein the first and second ceramic portions have a purity of 99.995% and higher and the joining layer comprises silicon dioxide having a total impurity content of 20 ppm and less and a bond thickness of between 0.1 and 20 um.

54) A joined ceramic body, comprising:

a. a first ceramic portion of aluminum oxide and a second ceramic portion of yttrium oxide;
b. a joining layer between interfaces of the first and second ceramic portions,

wherein the first ceramic portion has a purity of 99.99% and higher and the second ceramic portion has a purity of 99.999% and higher and the joining layer comprises silicon dioxide having a total impurity content of 20 ppm and less and a bond thickness of between 0.1 and 20 um.

55) A joined ceramic body, comprising:

a. first and second ceramic portions of aluminum oxide;
b. a joining layer between interfaces of the first and second ceramic portions,

wherein the first and second ceramic portions have a purity of 99.99% and higher and the joining layer comprises silicon dioxide having a total impurity content of 20 ppm and less and a bond thickness of between 0.1 and 20 um.

**Claims**

1. A joined ceramic body, comprising:

a. a first ceramic portion comprising a first ceramic;
b. a second ceramic portion comprising a second ceramic;
c. a joining layer between interfaces of the first ceramic portion and the second ceramic portion,

wherein the joining layer has a bond thickness of between 0.1 and 20 $\mu$m and comprises silicon dioxide having a total impurity content of 20 ppm and less.

2. The joined ceramic body of claim 1, wherein each of the first and second ceramic portions are selected from the group consisting of aluminum oxide, yttrium oxide, aluminum nitride, yttrium aluminum garnet (YAG; $Y_3Al_5O_{12}$),

yttrium aluminum monoclinic (YAM, $Y_4Al_2O_9$), yttrium aluminum perovskite (YAP YAlO$_3$), silicon carbide, quartz, SiAlON materials and combinations thereof.

3. The joined ceramic body of claim 1 or 2, wherein the joining layer is **characterized by** at least one of the following features:

- an alkali or alkali earth impurity content of 5 ppm and less;
- the joining layer further comprises a rare earth oxide selected from the group consisting of $Y_2O_3$, La2O3, CeO2, $Nd_2O_3$, $Pm_2O_3$, $Sm_2O_3$, $Eu_2O_3$, $Gd_2O_3$, $Tb_4O_7$, $Dy_2O_3$, $Ho_2O_3$, $Er_2O_3$, $Tm_2O_3$, $Yb_2O_3$, $Lu_2O_3$ and combinations thereof having a purity of 99.99% and higher;
- the joining layer further comprises an element selected from the group consisting of Y, La, Ce, Pr, Nd, Pm, Sm, Eu, Gd, Tb, Dy, Ho, Er, Tm, Yb and Lu and combinations thereof;
- the joining layer comprises a glass;
- the joining layer comprises a glass ceramic having a crystalline form in an amount between 1% and 99% by volume of the joining layer;
- the joining layer has a total impurity content of 10 ppm and less;
- the joining layer has a purity of 99.9995% and higher;
- the joining layer comprises a glass ceramic having a crystalline form in an amount between 10% and 99% by volume of the joining layer;
- the joining layer comprises a glass ceramic having a crystalline form in an amount between 20% and 99% by volume of the joining layer;
- the joining layer comprises a glass ceramic having a crystalline form in an amount between 1% and 90% by volume of the joining layer;
- the joining layer comprises a glass ceramic having a crystalline form in an amount between 1% and 80% by volume of the joining layer;
- the joining layer comprises a glass ceramic having a crystalline form in an amount between 1% and 70% by volume of the joining layer;
- the joining layer comprises a glass ceramic having a crystalline form in an amount between 50% and 80% by volume of the joining layer; and
- the joining layer has a coefficient of thermal expansion within 0 to 5% of either the first or second ceramic portions.

4. The joined ceramic body of any one of the preceding claims, wherein the first and second ceramic portions are aluminum oxide.

5. The joined ceramic body of any one of the preceding claims, wherein the first and second ceramic portions are selected from the group consisting of: $Al_2O_3$, AlN, SiAlON, SiC, $Y_2O_3$, yttrium aluminum garnet (YAG, $Y_3Al_5O_{12}$), yttrium aluminum monoclinic (YAM, $Y_4Al_2O_9$), yttrium aluminum perovskite (YAP, YAlO$_3$), mullite and combinations thereof.

6. The joined ceramic body of any one of the preceding claims, wherein the first and second ceramic portions have a purity of 99.99% and higher.

7. A method of making a joined ceramic body, the method comprising:

a. disposing a powder of silicon dioxide between surfaces of a first ceramic portion and a second ceramic portion to form a ceramic body assembly;
b. increasing the temperature of the ceramic body assembly to a sintering temperature of the powder of silicon dioxide sufficient to join first and second ceramic portions to form the joined ceramic body; and
c. lowering the temperature of the joined ceramic body,

wherein the silicon dioxide has a specific surface area as measured by BET methods of at least 25 m$^2$/g and a purity of 99.999% and higher, **characterized in that** the process is carried out under condition to prepare a joined ceramic body having characteristics as disclosed in any one of the preceding claims.

8. The method according to claim 7, wherein the sintering temperature of step b. is between 1100 and 1500°C.

9. The method according to claims 7 or 8, wherein the powders are in the form of a paste comprising a liquid selected from the group consisting of water, ethanol, isopropanol, glycerol, and combinations thereof.

10. The method according to any one of claims 7 to 9, further comprising the step of:
d. machining the joined ceramic body to create a joined ceramic body component for use in a semiconductor processing chamber.

11. Use of a joined ceramic body according to any of claims 6 or made by the process of any one of claims 7 to 10 for the production of semiconductor chamber components.

12. A plasma resistant composition, comprising:

a. silicon dioxide having a particle size of between 30 and 200 nm and a specific surface area as measured by BET methods of between 25 $m^2/g$ and 50 $m^2/g$;
b. aluminum oxide; and
c. at least one rare earth oxide selected from the group consisting of $Y_2O_3$, $La_2O_3$, $CeO_2$, $Nd_2O_3$, $Pm_2O_3$, $Sm_2O_3$, $Eu_2O_3$, $Gd_2O_3$, $Tb_4O_7$, $Dy_2O_3$, $Ho_2O_3$, $Er_2O_3$, $Tm_2O_3$, $Yb_2O_3$, $Lu_2O_3$ and combinations thereof; and
d. a suspension medium,

wherein the plasma resistant composition comprises a paste.

13. The plasma resistant composition of claim 12, wherein the silicon dioxide has a total purity of at least 99.999% and higher.

14. The plasma resistant composition of claim 12 or 13, wherein the suspension medium comprises a liquid selected from the group consisting of water, ethanol, isopropanol, glycerol, and combinations thereof.

15. The plasma resistant composition of any one of claims 12 to 14, having a maximum particle size of between 4 and 6 microns.

a) 500x          b) 5000x

FIG. 1

a) 500x                    b) 5000x

FIG. 2

FIG. 3

Fig. 4

FIG. 5

EP 3 919 463 A1

FIG. 6A

FIG. 6B

FIG. 7

Europäisches
Patentamt

European
Patent Office

Office européen
des brevets

# EUROPEAN SEARCH REPORT

Application Number

EP 20 17 7735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 828 597 A (GLASCOCK II HOMER H [US] ET AL) 9 May 1989 (1989-05-09)<br>* column 8, lines 26-65 *<br>* column 8, lines 1-5 *<br>* column 7, lines 50-61 *<br>* column 6, lines 14-30 *<br>* claims 1-3 *<br>----- | 1-7,10, 11 | INV.<br>C04B37/00 |
| X | EP 0 939 061 A1 (NGK INSULATORS LTD [JP]) 1 September 1999 (1999-09-01)<br>* paragraphs [0055] - [0058] *<br>* paragraph [0038] *<br>* paragraph [0060] *<br>* claims 1,7,8,11,14 *<br>----- | 1-3,6-10 | |
| A | US 2018/265973 A1 (FIROUZDOR VAHID [US] ET AL) 20 September 2018 (2018-09-20)<br>* claims *<br>* paragraph [0002] *<br>----- | 1-11 | |

**TECHNICAL FIELDS SEARCHED (IPC)**

C04B

~~The present search report has been drawn up for all claims~~

| Place of search | Date of completion of the search | Examiner |
|---|---|---|
| The Hague | 20 October 2020 | Sow, Eve |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-11

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 20 17 7735

The Search Division considers that the present European patent application does not comply with the requirements of unity of invention and relates to several inventions or groups of inventions, namely:

1. claims: 1-11

   A joined ceramic body, comprising: a. a first ceramic portion comprising a first ceramic;b. a second ceramic portion comprising a second ceramic;c. a joining layer between interfaces of the first ceramic portion and the second ceramic portion,wherein the joining layer has a bond thickness of between 0.1 and 20/1 m and comprises silicon dioxide having a total impurity content of 20 ppm and less.

   ---

2. claims: 12-15

   A plasma resistant composition, comprising: a. silicon dioxide having a particle size of between 30 and 200 nm and a specific surface area as measured by BET methods of between 25 m2 /g and 50 m2 /g;b. aluminum oxide; and. at least one rare earth oxide selected from the group consisting of Y2 03 , La2 03 , Ce02 , Nd2 03 , P1TI2 03 , Sm2 03 , EU2 03 , Gd2 03 , Tb4 07 , Dy2 03 , H02 03 , Er2 03 , Tm2 03 , Yb2 03 , Lu2 03 and combinations thereof; and a suspension medium, wherein the plasma resistant composition comprises a paste.

   ---

## ANNEX TO THE EUROPEAN SEARCH REPORT
## ON EUROPEAN PATENT APPLICATION NO.

EP 20 17 7735

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2020

| Patent document cited in search report | | Publication date | Patent family member(s) | | Publication date |
|---|---|---|---|---|---|
| US 4828597 | A | 09-05-1989 | NONE | | |
| EP 0939061 | A1 | 01-09-1999 | DE | 69908445 T2 | 06-05-2004 |
| | | | EP | 0939061 A1 | 01-09-1999 |
| | | | JP | 4257711 B2 | 22-04-2009 |
| | | | JP | H11243034 A | 07-09-1999 |
| | | | US | 6376085 B1 | 23-04-2002 |
| | | | US | 2002064669 A1 | 30-05-2002 |
| US 2018265973 | A1 | 20-09-2018 | CN | 108623328 A | 09-10-2018 |
| | | | CN | 108623330 A | 09-10-2018 |
| | | | JP | 2018162205 A | 18-10-2018 |
| | | | JP | 2018168472 A | 01-11-2018 |
| | | | KR | 20180106858 A | 01-10-2018 |
| | | | KR | 20180106870 A | 01-10-2018 |
| | | | SG | 10201800532U A | 30-10-2018 |
| | | | TW | 201840890 A | 16-11-2018 |
| | | | TW | 201842223 A | 01-12-2018 |
| | | | US | 2018265972 A1 | 20-09-2018 |
| | | | US | 2018265973 A1 | 20-09-2018 |

EPO FORM P0459

For more details about this annex : see Official Journal of the European Patent Office, No. 12/82

**EP 3 919 463 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62829720 B

- US 62936821 B